# EUROPEAN PATENT APPLICATION

(11) **EP 2 806 632 A1**
(43) Date of publication of application: **26.11.2014**
(21) Application number: 13305663.0
(22) Date of filing: 23.05.2013
(51) Int. Cl.: H04N 7/18, H04L 29/06, H04N 21/24, H04N 21/41

(54) **Method and apparatus for optimizing video quality of experience in end-to-end video applications**

(71) Applicant: ALCATEL LUCENT, 92100 Boulogne-Billancourt (FR)
(72) Inventor: Follesa, Gianluca, 9100 Sint-Niklaas (BE); Van den Berghe, Steven, 9620 Zottegem (BE); Trickey, Hemi, Naperville, IL, IL Illinois 60540 (US); Van Moffaert, Annelies, 2600 Berchem (BE); Diner, David, Aurora, IL Illinois 60503 (US)
(74) Representative: ALU Antw Patent Attorneys

(57) **Abstract**

A method for improving quality of experience in a communication between a first plurality of video sources (Cam1, cam2, cam2) to a second plurality of video clients (C1, C2) via a video composing module (VSE) in between said plurality of video sources and said second plurality of clients, and triggered by a dispatching unit (D) controlling which clients and video sources are participating in said communication, and which respective composed videos (VcompC1, VcompC2) are to be provided from said video composing module (VSE) to respective clients (C1, C2) of said second plurality, comprises the steps of :
- receiving from said dispatching unit (D) client related parameters (CP1, CP2) indicating display and layout configuration of said respective composed video (VcompC1, VcompC2) to be provided to said respective client (C1, C2),
- determining respective optimized video feed configurations between each respective video source (Cam1, Cam2, cam3) and said video composing module (VSE) based on said client related parameters and on network restriction parameters (NC(t)),
- adapting the respective video communication sessions between the respective video sources (Cam1, Cam2, Cam3) and the video composing module (FRV) by providing said respective optimized video feed configurations as respective control signals (Ccam1(t), Ccam2(t), Ccam3(t)) to said respective video sources (Ccam1, Ccam2, Ccam3).

## Description

The present invention relates to a method for improving quality of experience, more in particular in video end-to-end applications.

In present systems, end-to-end quality of experience, which is hereafter abbreviated by QoE, for video applications is a.o. determined by video encoding settings and quality of service, hereafter abbreviated by QoS, configuration of the transportation network. Such a network can be any type of mobile or fixed network, or any combination of both.

Current systems however may focus only on optimizing the QoS network aspect. These solutions embrace management systems taking video flow specifications as input, and, based upon this, e.g. allocate bitrate (min/max).

Adaptive video coding on the other hand focuses on optimizing QoE by adapting the video encoding parameters, but this can only be performed on end-to-end feedback channels involving e.g. http segment requests, retransmission requests, ....

Another alternative approach could be to use scalable video coding to allow the end-to-end QoE to be flexibly adapted. However this comes at a too high cost in terms of encoding complexity including a bandwidth overhead.

It is therefore an object of embodiments of the present invention to provide a more generic solution for the aforementioned problems.

According to embodiments of the present invention a method is provided for improving quality of experience in a communication between a first plurality of video sources to a second plurality of video clients via a video composing module in between said first plurality of video sources and said second plurality of clients, and triggered by a dispatching unit controlling which clients and video sources are participating in said communication, and which respective composed videos are to be provided from said video composing module to respective clients of said second plurality, said method comprising the steps of :
- receiving from said dispatching unit client related parameters indicating display and layout configuration of said respective composed video to be provided to said respective client,
- determining respective optimized video feed configurations between each respective video source and said video composing module based on said client related parameters and on network restriction parameters,
- adapting the respective video communication sessions between the respective video sources and the video composing module by providing said respective optimized video feed configurations as respective control signals to said respective video sources.

In this way, by the determination and adaptation of the video communication sessions between a plurality of video sources and a composing server, in function of the client's needs, and taking into account network restrictions, during this determination and adaptation, more optimized end-to-end video communication sessions between the video sources and the clients are realized.

In an embodiment the determination and adaptation is further performed upon detecting changing network conditions, thereby influencing said network restriction parameters.

This leads to a dynamic update of the provisioning of the video feeds, allowing to quickly respond to changing network conditions. Such changing network conditions may comprise information related to bitrate, maximum and minimum bandwidth for a connection, shaping rules, pre-emption priorities, etc.

These network conditions may relate to both the communications sessions between the video composing module and the video sources on one hand, also sometimes denoted uplink communication sessions, and between the video composing module and the clients, also denoted downlink communication sessions on the other hand. The end-to-end communication between the video source and the client therefore comprises an uplink and a downlink communication session with the video composing module.

In a variant embodiment the determination and adaptation is further performed upon receiving client feedback information, and wherein said client feedback information is further used during the determination of the said respective optimized video feed configurations and respective control signals.

Such feedback information from the client may comprise information related to packet delay, packet drop and hardware capabilities of the client. Alternatively, client feedback may also steer changes in video layout parameters for that client. This client feedback may be in addition to and can potentially modify the original lay-out set by the dispatching unit D. The freedom of the client to modify its layout can be a configurable parameter depending on the particular embodiment.

In this way again a very dynamic way for responding to quickly varying conditions at the client side is obtained.

In a further embodiment the method comprises a step of determining optimized video downlink communication parameters for the respective video communication sessions between the video composing module and the respective clients.

Furthermore said optimized video downlink communication parameters for the respective video communication sessions between the video composing module and the respective clients can be provided by the video server controller to a traffic control module of the network, upon which step said respective video communication sessions are adapted in accordance with said optimized video downlink communication parameters.

In case network overload conditions are detected a switchover may then occur from unicast to multicast for the communications between the video composing module and the clients.

Embodiments of the present invention relate as well to embodiments of a video server controller module cooperatively coupled to a video composing module, and both adapted to implement parts of the aforementioned embodiments of the method, and to a computer program comprising software code adapted to perform the steps as set out in the previously mentioned methods.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:
Fig 1 schematically shows a situation wherein an embodiment of a video server controller is used for implementing an embodiment of the method,
Fig. 2 shows a variant embodiment of a video server controller for realizing a variant method,
Fig. 3 shows a high level diagram of the inputs and interactions for realizing an embodiment of the method,
Fig. 4 shows a high level representation of several steps of an embodiment of the method,
Fig. 5 shows a detailed implementation of an embodiment of the method.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Embodiments of the present invention are for instance used in deployments of private networks for security or emergency purposes, e.g. networks where inputs from surveillance cameras will be provided to client receivers positioned in police cars. In this case the network will usually be a wireless network, but in other situations a fixed network can be used, or a combination of both.

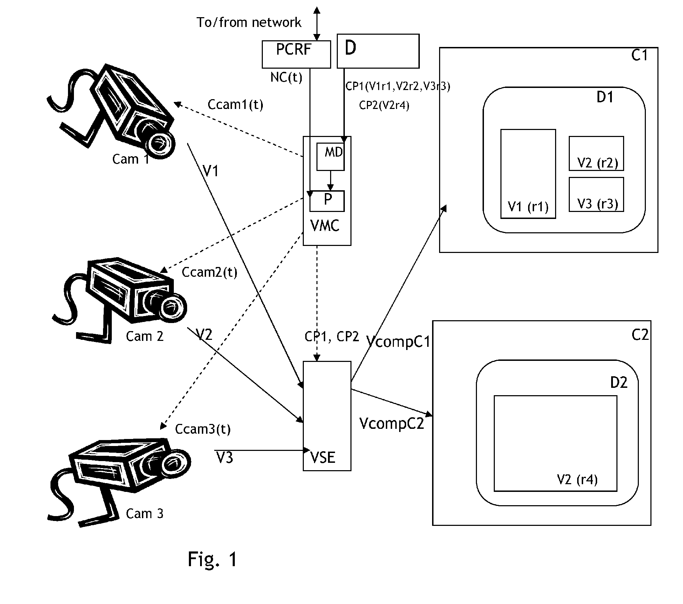

Such a situation is for instance depicted in fig. 1 where 3 cameras , respectively denoted cam 1, cam2 to cam3 provide their video output, also called video feed and respectively denoted V1,V2 to V3, to a video composing module module, denoted VSE. This video composing module VSE is adapted to mix or combine the video inputs of the cameras into one or more dedicated composed video stream, and is further adapted to operate under control of a video server controller FRVc. In some embodiments, which are not shown on the figures, both VSE and VMC can be part of one single video server. It is to be remarked that in such embodiments such partition in different server modules is not present and that one single video server may be adapted to perform both the composing and the control by e.g. one single processor. In other embodiments, the modules VMC and VSE can be further implemented on separate processors not part of the same physical server, but communicatively coupled such as to form one functional video server entity.

The video composing server module, denoted VSE, is thus adapted to receive a number of video feeds, which, in one embodiment may be provided by a plurality of surveillance cameras, connected to the VSE via e.g. a fixed or mobile or any combination thereof type of interconnection. The video composing module VSE is further adapted to, if necessary, decode the received video inputs from the cameras, and to make respective compositions into respective composed videos, based on the respective camera inputs, to optionally encode the respective composed videos, and to provide them to the respective clients. These respective composed video streams provided by VSE are denoted VcompC1 and VcompC2 in fig. 1 , for being sent to respective clients, denoted C1 and C2 in fig. 1, coupled to the video composing module VSE. In the previously mentioned example the clients are receivers which can e.g. be placed in police cars, so in this case the coupling between VSE and the clients is provided via a mobile network. However in other environments, e.g. where inputs of surveillance cameras are composed in a server for being transmitted to a plurality of emergency centers such as e.g. hospitals or a fire brigade, these connections can be provided via a fixed network or any combination of fixed or mobile network.

The clients themselves usually have a display, respectively denoted D1 and D2, for showing the respective received composed videos VcompC1 and VcompC2.

The control and make-up of the composition of the respective composed video streams VcompC1 and VcompC2 is determined by the controller VMC. In the embodiment of Fig. 1 this controller module may comprise a memory MD, for receiving control input information from a dispatching module D. Such a dispatching module may comprise an interface to the VMC, for providing manual inputs from a person at e.g. a police or emergency dispatching center, which inputs may comprise which camera feeds have to be provided to which clients. In the example depicted in fig. 1, the dispatching center had decided that C1 has to receive all camera feeds V1 to V3, while C2 only has to receive the video V2 from camera Cam2.

In an embodiment the dispatching center D also knows the technical capabilities of the displays of all these clients, their roles (e.g. which police car needs to receive most information), and their limits and technical possibilities or characteristics. In another embodiment this information is directly provided by the clients to the VMC. In the first configuration the dispatcher knows the operational information comprising the roles of all first clients in the organization (e.g. police) and for a particular incident, their location (GPS) in real-time, the incident information leading to the decision which videos need to be pushed to which first responders or clients and in which lay-out.

The client specific information such as technical client device (tablet/smart phone) resolution, as well as information on the network conditions can be directly provided by the client to the video server controller. The latter can optionally also provide this information to the dispatcher.

Based on all this information, this dispatcher may then decide that client C1 has to receive video 1 (V1) at a resolution denoted r1, video 2 (V2) at a resolution r2, and video 3 (V3) at a resolution r3. The dispatcher thus provides this information with respect to the composition (which feeds and in which layout and resolution) and configuration of the displays of the different clients to the video server controller module VMC. In Fig. 1 this is denoted by means of the arrow between the dispatching module D to the memory device MD within the video server controller VMC. In Fig. 1 all this information is denoted as CP1(V1r1, V2r2, V3r3).

Similarly, this dispatcher may have also decided that client 2 will receive video 2 at another resolution, e.g. r4. This information is provided as well by the dispatching module to the memory device MD. In Fig. 1 this information is denoted as CP2(V2r4).

Embodiments of the present invention relate to the video server controller module VMC which is further adapted, e.g. by means of a processing unit P therein, to receive these client specific display and layout configuration data , denoted CP1 and CP2, and network restriction parameters, denoted NC(t), such as maximum bit rate for the uplink communication session between the cameras and the video composing module VSE. This video server controller is therefore adapted to determine from these inputs relating to the different client display configurations, and network restriction parameters further control signals for provision to these respective cameras. If, for instance, the maximum resolution at which video V2 is to be provided is only r4 (as in the example of fig. 1), there is no need for camera2 to provide the video V2 at a higher resolution than the highest one required. These respective control signals comprising information about the resolution, frames per second, group of pictures and bitrate, is generated and provided by VMC, under the form of control signals, being respectively denoted Ccam1(t), Ccam2(t) and Ccam3(t) for being provided to respective video sources cam1, cam2 and cam3 respectively. The time dependency of these signals relates to the possibly varying network conditions, thereby influencing also the bitrates requested from and sent by the respective cameras to the network and which can vary as a function of network resources.

In a simple case where such network resources would not vary, VMC can thus configure each camera to inject the appropriate video (in terms of resolution) into the network. Indeed, if a client only needs a low resolution view on the camera to be embedded in a mosaic view, there is no need for the camera to output a higher resolution, putting unnecessary stress on the network.

The client configuration information CP1 and CP2, is as well provided to the video composer module VSE , which, upon receipt of the video feeds can then create the respective composed videos in accordance with this information and provide these separate composed videos adapted to the specific client needs to the respective clients.

The video server controller VMC is thus adapted to determine a dynamic configuration for each session between the video feeds and the video composing module VSE, based not only on a combination of required layout and client display conditions, but thus also on network conditions. The network conditions, denoted NC (t) in fig. 1, can indeed put a ceiling on the available bitrate between each source (the cameras) and the VSE on one hand, but also between the VSE and each client. These network conditions are in an LTE mobile network provided by a module denoted PCRF, and would for instance comprise end-to-end delay, end-to-end jitter , bitrate per session, etc as is well known by a person skilled in the art. In other types of networks another module can interface with the network and the VMC for providing these network condition parameters to the VMC. For the provision of these parameters one can rely on thus existing QoS management/brokering mechanisms such as the already mentioned PCRF functionality in LTE networks. Note that network resources might be variable themselves (e.g. for mobile users moving between cells), which might trigger a feedback (e.g. pre-emption of a session) requiring to re-optimize the constellation of sessions . The variability of the network resources as a function of time is thus also taken into account when determining the camera parameters Ccam1(t) to Ccam3(t), hence their dependency on the time.

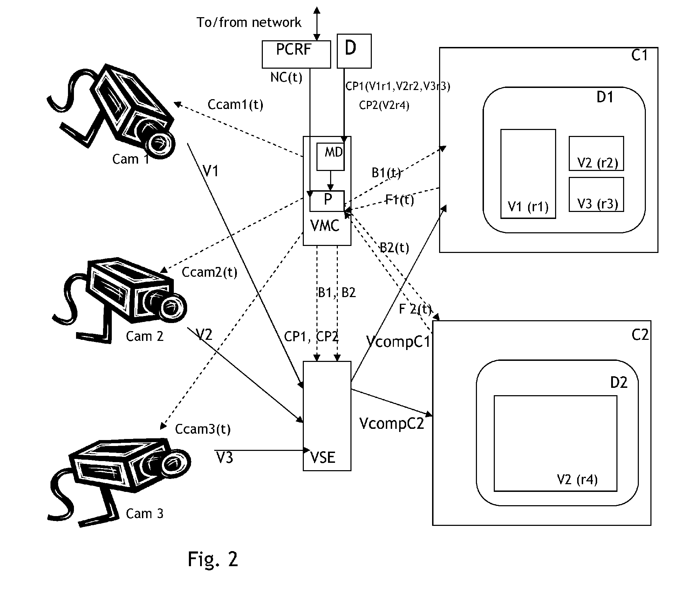

In a more complex embodiment the VMC video server controller may also be configured to determine and output the appropriate bitrate to each client. This is shown in fig. 2 by means of the respective control signals comprising the optimized video communication parameters B1(t) and B2(t) such as the bitrate, from VMC to C1, resp C2. Alternatively this downstream bitrate between the video composing module and the respective clients may also be directly communicated by VMC to the network broker module, being PCRF in Fig. 2. This downstream bitrate may also be communicated to the video composing module VSE, which is generating the respective composed video streams at a certain frame rate, which should be compliant to the bitrate foreseen for these video transmission between VSE and C1, C2.

The exchanged communication parameters with the network can further comprise information with respect to the Subscriber (client) Identifier, Media type and format, Bandwidth, Application Id, Priority indicator, (uplink and downlink) min and max bandwidth and shaping rules and in certain cases an indication on pre-emption priority.

In this embodiment of Fig. 2, Interaction of a user with the flow (e.g. to switch from a mosaic layout to a full screen view of a single video stream) might also be a trigger for the constellation of sessions to be re-configured. For example when the dispatcher had earlier decided that C1 has as default layout of a 2x2 mosaic, C1 can still autonomously decide to switch between this default 2x2 and a full screen view of one of the 4 videos of the mosaic.

This interaction information is shown in Fig. 2 by means of information F1(t) and F2(t) being provided from the respective clients to the video controller VMC. In some situations the client can also provide feedback on the client video processing conditions as packet delay, packet drop, change in hardware at the display or decoder etc. This can also be provided as a feedback signal from the respective clients to the video server controller VMC.

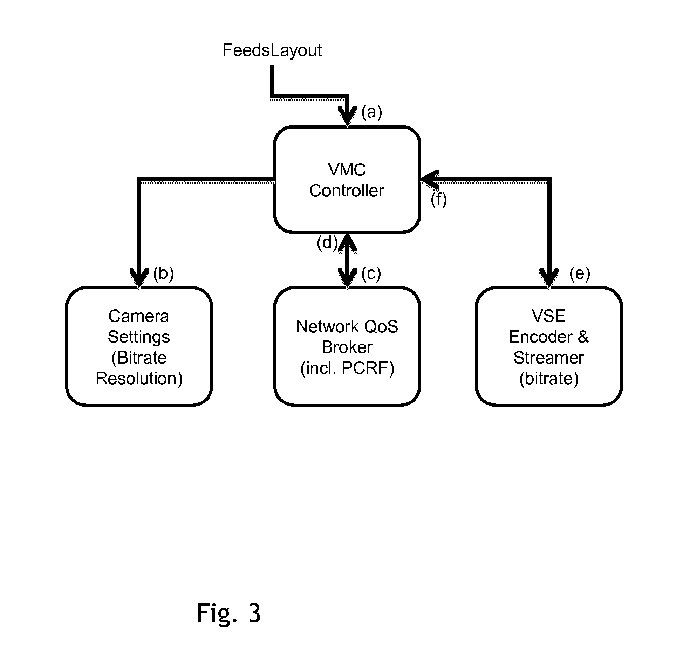

All these different functions are schematically denoted in Fig. 3 . the arrow denoted (a) shows the input of the configuration parameters of the clients as well as the configuration and layout of the composed video per client as provided from the dispatching unit to the VMC. The VMC takes this information into account together with network information for controlling the cameras by providing control signals to these cameras (b). (c) indicates further information delivery to a network broker for enabling the sessions between the cameras and the video composing module in accordance with the camera settings. (d) denotes further information coming from the network to the VMC, for informing the latter on changing network conditions e.g. change in signal to noise ratio, pre-emption conditions. (e) indicates the provision of the downstream bitrates to the video composing module, more in particular to an encoder and streaming module thereof. These are to generate and to provide the respective composed video streams at a frame rate which is thus to be in accordance with the bitrate foreseen for this communication between VSE and C1, C2. (f) indicates feedback from the client to the video server controller, which feedback can thus both relate to problems with the video delivery, processing or display at the client , but could also relate to changing conditions of the video composition (e.g. client C1 wants to see video V1 in full screen at a certain moment in time).

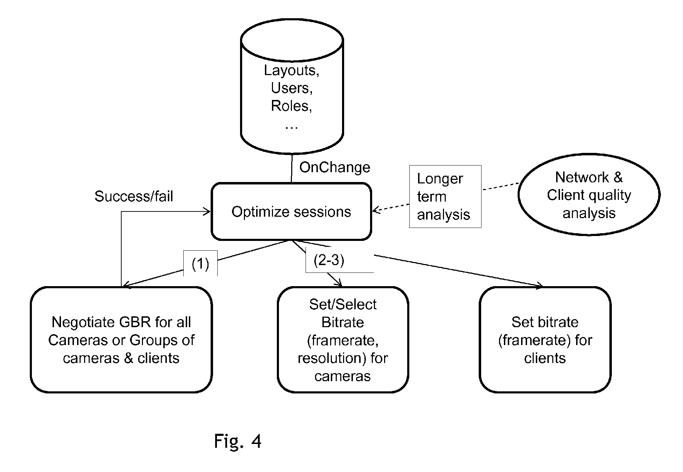

Fig. 4 basically shows the same steps. In this embodiment an initial negotiation of a guaranteed bitrate takes place between the VMC and the network broker. After this is established, the sessions are further optimized in accordance with the previously mentioned principles.

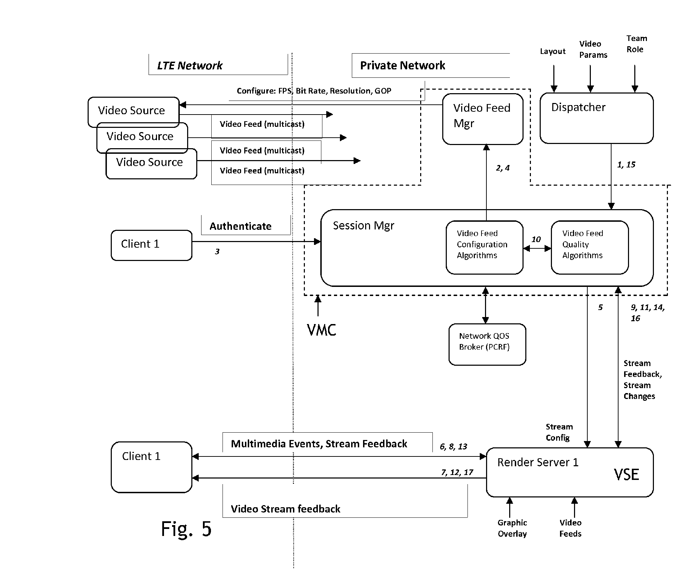

Fig. 5 gives a very detailed and specific implementation. In this embodiment the video server controller module comprises a video feed manager and a session manager . The Render Server module of Fig. 5 corresponds to the video composing module VSE in Figs. 1 and 2. The steps as shown in fig. 5 are the following :
1) Dispatcher creates an incident. Client are allocated to a team in a certain role and video feeds are associated with the client.
2) Session manager ask the video feed manager to configure the video feeds with certain parameters (frames per second, bit rate, resolution, GOP, etc) and start streaming the feeds. The Network QOS broker is informed to create a new upstream GBR tunnel for the video feeds with certain QOS parameters.
3) Client authenticates with session manager. The session manager retrieves information about the client's team, role and video feeds. It talks to the network QOS broker to assign QOS parameters to the client Guaranteed Bit Rate bearer tunnel
4) Session Manager determines the best video feed configuration based on how each client in the system is using the video feeds, i.e. the maximum bit rate, maximum resolution, maximum frames per second and asks the video feed manager to configure the video feeds with the best parameters. The Network QOS broker is informed of any changes for existing clients and a new GBR tunnel is created for the new client.
5) Session Manager assigns a render server to render the video image that the client has been assigned. The client is asked to reconnect to the render server.
6) Client opens a signaling channel with the Render Server. This bidirectional channel is used to send and receive signaling messages such as multimedia events and forward bearer stream feedback.
7) Render Server builds a composite video which includes all video feeds and overlay graphics needed by the client.
8) client sends feedback information back to the Render Server.
9) Render Server forwards the feedback information received from the client. The feedback information contains packet delay, packet drop and hardware capability of the client.
10)Session Manager determines the video stream to the client needs tuning. The video feed take this new adjustment into consideration and determine if the video feeds need to be reconfigured.
11)Session Manager tells render server to reconfigure video streaming parameters to dynamically adjust to changing air interface conditions. The Network QOS broker is informed of any changes needed.
12) Render Server adjust the video stream to the client with the new parameters.
13)The client issues a multimedia event which causes the video rendering to change. The video stream changes to reflect this event.
14)The Render Server informs the Session Manager about the video feed change which triggers the video feed algorithms to check if the video feeds need to be adjusted.
15) Dispatcher creates a change to the video feeds. The Session Manager determines if the video feeds used by all clients need to be adjusted based on the new event.
16)Session Manager reconfigures the Render Server to reflect the dispatcher event.
17)Render Server changes the stream to reflect the dispatcher event.

In a further variant the video server controller can decide to switch over from several unicast connections between the video composing module and the respective clients, to a multicast connection. This can be appropriate in case of a emergency situation, where several ones of such mobile clients will all head towards the same position, e.g. in case several police cars or fire trucks are heading to the place of the accident. This means that at a certain moment in time all mobile clients can be positioned within the same cell of the mobile network which is providing the transmission between the video composing server and these clients. In such a cell the available bandwidth has to be divided amongst these different clients. This can sometimes be very difficult or even impossible. In such a situation the video server controller can then decide that the connections between the video composing module VSE and the clients, which were until then individual unicast connections, have to change to one single multicast connection. This however further implies only one single composed video stream to be transmitted over this multicast connection. The composition of this single multicast stream can thus be different from the previous respective unicast streams tailored to the needs of the clients. In such case the video server controller makes a decision on which videos have to be shown at which resolution, still taking into account as much as possible the requirements of the clients, and the restriction of bandwidth of the multicast connection.

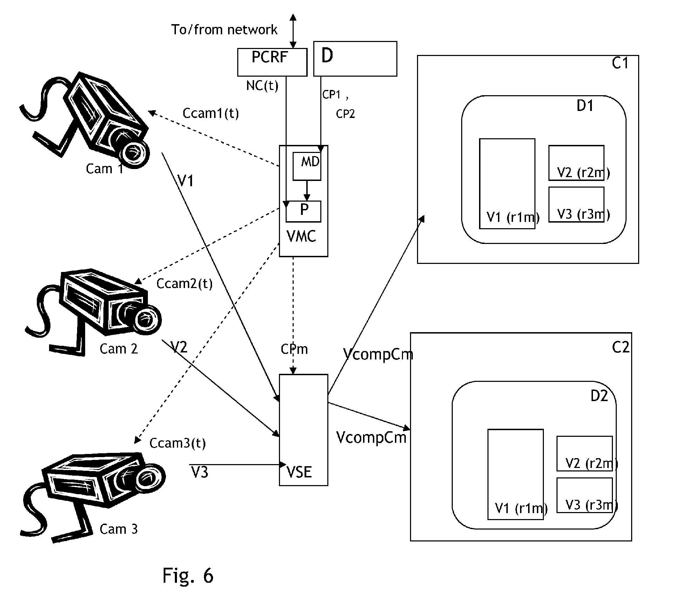

For the previously mentioned example it is thus possible that the multicast composed video stream may look different from the individual unicast streams which were initially transmitted. This is shown in fig. 6 where the new composed multicast stream VcompCm has the appearance and composition of the earlier unicast stream VcompC1, but the resolutions are somehow lower, for accommodating a lower available bandwidth. These resolutions are denoted r1 m,r2m and r3m.

The decision to switch over from unicast to multicast is taken by the video server controller VMC, which, in one embodiment takes this decision upon detecting that all clients are in the same mobile network cell and that there is congestion of traffic in that cell, and on the condition that all these clients have the same role (e.g. all belong to similar police cars), and that there is no real need for client interactivity (e.g. the clients do not need to further zoom or select a certain video anymore). The first two of these 4 conditions can be derived from the network condition NC(t) communicated by the PCRF module, the latter two are known by the video server controller from the initial communication from the dispatching module D. In another embodiment the video server controller VMC can also take the decision to switch over from unicast to multicast if only the first two conditions are fulfilled, so when all clients are situated in the same cell and when there is congestion. In that case the VMC may autonomously decide that the connections between VSE and the clients will be a multicast connection, so without any possibilities anymore for client interactivity.

While the principles of the invention have been described above in connection with specific apparatus, it is to be clearly understood that this description is made only by way of example and not as a limitation on the scope of the invention, as defined in the appended claims.

## Claims

1. Method for improving quality of experience in a communication between a first plurality of video sources (Cam1, Cam2, Cam3) to a second plurality of video clients (C1, C2) via a video composing module (VSE) in between said first plurality of video sources and said second plurality of clients, and triggered by a dispatching unit (D) controlling which clients and video sources are participating in said communication, and which respective composed videos (VcompC1, VcompC2) are to be provided from said video composing module (VSE) to respective clients (C1, C2) of said second plurality, said method comprising the steps of :
- receiving from said dispatching unit (D) client related parameters (CP1, CP2) indicating display and layout configuration of said respective composed videos (VcompC1, VcompC2) to be provided to said respective client (C1, C2),
- determining respective optimized video feed configurations between each respective video source (Cam1, Cam2, cam3) and said video composing module (VSE) based on said client related parameters and on network restriction parameters (NC(t)),
- adapting the respective video communication sessions between the respective video sources (Cam1, Cam2, Cam3) and the video composing module (FRV) by providing said respective optimized video feed configurations as respective control signals (Ccam1(t), Ccam2(t), Ccam3(t)) to said respective video sources (Ccam1, Ccam2, Ccam3).

2. Method according to claim 1 wherein the determination of the respective video feed configurations of the respective video communication sessions between the respective video sources (Cam1, Cam2, Cam3) and the video composing module (VSE) and the adaptation of the respective video communication sessions between the respective video sources (Cam1, Cam2, Cam3) and the video composing module (VSE) is further performed upon detecting changing network conditions, from said network restriction parameters (NC(t)).

3. Method according to claim 1 or 2 wherein the determination of the respective video feed configurations between each respective video source (Cam1, Cam2, Cam3) and the video composing module (VSE) and the adaptation of the respective video communication sessions between the respective video sources (Cam1, Cam2, Cam3) and the video composing module (VSE) is further performed upon receiving client feedback information, (F1(t), F2(t)) such that said client feedback information is further used during the determination of said respective optimized video feed configurations and respective control signals (Ccam1(t), Ccam2(t), Ccam3(t)).

4. Method according to any of the previous claims 1 to 3 further comprising a step of determining optimized video downlink communication parameters (B1(t), B2(t)) for the respective video communication sessions between the video composing module (VSE) and the respective clients (C1, C2).

5. Method according to claim 4 wherein said optimized video downlink communication parameters for the respective video communication sessions between the video composing module (VSE) and the respective clients (C1, C2) are provided by the video server controller to a traffic control module of the network, upon which step said respective video communication sessions are adapted in accordance with said optimized video downlink communication parameters.

6. Method according to claims 4 to 5 wherein, in case network overload conditions are detected a switchover will occur from unicast to multicast for the communications between the video composing module (VSE) and the clients (C1,C2).

7. Video server controller (VMC) adapted to control video communications between a first plurality of video sources (Cam1, Cam2, Cam3) to a second plurality of video clients (C1, C2) via a video composing module (VSE) in between said first plurality of video sources and said second plurality of clients, said video server controller (VMC) being adapted to receive information from a dispatching unit (D) informing said video server controller (VMC) which clients and video sources are participating in said communication, said video server controller (VMC) further being adapted to
- receive from said dispatching unit (D) client related parameters (CP1, CP2) indicating display and layout configuration of respective composed videos (VcompC1, VcompC2) which are to be generated and provided from said video composing module (FRV) to said respective clients (C1, C2),
- determine the composition of said respective composed videos (VcompC1, VcompC2) and provide said composition information to said video composing module (FRV),
- receive network restriction parameters (NC(t)) from a network broker module (PCRF)
- determine respective optimized video feed configurations between each respective video source (Cam1, Cam2, cam3) and said video composing module (VSE) based on said client related parameters and said network restriction parameters (NC(t)),
- provide said respective optimized video feed configurations as respective control signals (Ccam1(t), Ccam2(t), Ccam3(t)) to said respective video sources (Ccam1, Ccam2, Ccam3).

8. Video server controller according to claim 7 further being adapted to determine the respective video feed configurations of the respective video communication sessions between the respective video sources (Cam1, Cam2, Cam3) and the video composing module (VSE) upon detecting changing network conditions, from said network restriction parameters (NC(t)) as received from said network broker module (PCRF).

9. Video server controller (VMC) according to claim 7 or 8 further being adapted to determine the respective video feed configurations between each respective video source (Cam1, Cam2, Cam3) and the video composing module (VSE) upon receiving client feedback information, (F1(t), F2(t)).

10. Video server controller (VMC) according to any of the previous claims 7 to 9 further being adapted to determine optimized video downlink communication parameters (B1(t), B2(t)) for the respective video communication sessions between the video composing module (VSE) and the respective clients (C1, C2).

11. Video server controller (VMC) according to claim 10, further being adapted to determine a network overload situation on the respective video communication sessions between the video composing module (VSE) and the respective clients (C1, C2), and, in case such of such a network overload situation, to generate a dedicated switchover control signal for initiating a switchover to a multicast-type communication between the video composing module (VSE) and the clients (C1,C2).

12. Video composing module (VSE) coupled in between a first plurality of video sources (Cam1, Cam2, Cam3) and a second plurality of video clients (C1, C2) and being adapted to receive from a video controller module (VMC) coupled to said video composing module (VSE) instructions with respect to the composition of respective composed videos (VcompC1, VcompC2) for being generated by said video composing module from video feeds (V1,V2,V3) provided by said video sources (Cam1, Cam2, Cam3) to said video composing module, said video composing module further being adapted to provide said respective composed videos (VcompC1, VcompC2) to said respective clients.

13. Video composing module (VSE) according to claim 12 further being adapted to, upon receipt of a dedicated switchover control signal (CPm) from said video controller module (VMC), to generate a single multicast composed video stream (Vcompm) for being provided over a multicast connection to said clients.

14. Computer program adapted to perform the method according to any of the previous claims 1 to 6.
